# EUROPEAN PATENT APPLICATION

(11) **EP 1 652 765 A2**
(43) Date of publication of application: **03.05.2006**
(21) Application number: 05023174.5
(22) Date of filing: 24.10.2005
(51) Int. Cl.: B62K 25/08

(54) **Valve system controlled by rate of pressure change**

(30) Priority: 28.10.2004 AU 2004906197; 17.11.2004 AU 2004906583
(71) Applicant: Potas, Michael, Alexandria NSW 2015 (AU)
(72) Inventor: Potas, Michael, Alexandria NSW 2015 (AU)
(74) Representative: Schoppe, Fritz

(57) **Abstract**

An apparatus that includes a valve for controlling the flow of fluid between a first fluid chamber (1) and a second fluid chamber (2) via a first fluid pathway (3) in a damping device in response to the rate of pressure change in the first fluid chamber, such that when the valve is in a closed state, a relatively rapid change of pressure cause the valve to move to an open state that enables flow through the fluid pathway (3), and such that a relatively slow change of pressure maintains the valve in the closed state that restricts or prevents flow through the fluid pathway (3). One version includes using a method for biasing the valve means towards the closed state. The valve includes a second fluid pathway (12) to provide fluid connection between the first fluid chamber (1) and a third fluid chamber (8), the second fluid pathway (12) being configured such that the rate of flow in the second fluid pathway (12) is restricted.

## Description

### RELATED PATENT APPLICATIONS

This invention claims benefit of Australian Provisional Patent Application No. 2004906583, filed 17 November 2004 to inventor Potas titled VALVE SYSTEM CONTROLLED BY RATE OF PRESSURE CHANGE, and of Australian Provisional Patent Application No. 2004906197, filed 28 October 2004 to inventor Potas titled VALVE SYSTEM CONTROLLED BY RATE OF PRESSURE CHANGE. The contents of these two Australian Provisional Patent Applications are incorporated herein by reference.

### BACKGROUND

The present invention relates to a method and apparatus for controlling the flow of fluid through a valve system. The present invention is particularly suited for use in a damping system that is part of a suspension system in a vehicle such as a bicycle, motorcycle or other motor vehicle.

In its most basic form, a telescoping suspension system used in a vehicle includes two telescoping members that are coaxially engaged. Force is applied to the telescoping members to move them into an extended position relative to each other by way of a spring or pressurized chamber. Typically the wheel of the vehicle is connected to one of the telescoping members, and the body of the vehicle is connected to the other telescoping member. When the moving vehicle encounters a bump on the road, the telescoping members move toward each other during the compression stroke. When the wheel rolls over a bump or falls into a depression in the road, the telescoping members move away from each other in the rebound stroke. This provides a more comfortable ride for the vehicle, and enhances the driver's ability to control the vehicle over bumpy terrain.

A damping system is often desired in a suspension system, e.g., one that includes two telescopic members to dampen relative movement of the members and prevent excessive bouncing of the vehicle when the vehicle travels over varying road conditions. Such damping is often performed by forcing a viscous fluid to flow between a first and second fluid chamber when the telescoping members move toward each other, and forcing the fluid to flow from the second to the first fluid chamber when the telescoping members move away from each other. The flow between fluid chambers is restricted by a small fluid passage between the fluid chambers, providing therefore a damping force that opposes movement of the telescoping members.

A more advanced damping system includes a valve system of a combination of valves and/or fluid passages to provide different levels of damping for the compression and rebound strokes. This provides a greater ability to tune the damping system to the different damping requirements of the rebound and compression strokes.

For improved suspension performance, there is a need to adjust the level of damping in either the rebound or the compression strokes. One example where this is useful is in a pedal-powered vehicle with suspension, such as a bicycle, in particular a mountain bicycle. When a rider is pedaling, it is advantageous for a damping device to have (relatively) very high compression damping, or to hydraulically lock the suspension completely, in order to prevent pedaling-induced movement of the suspension. However, when the bicycle hits a bump, it is advantageous for a damping device to have (relatively) low levels of compression damping to allow the suspension system to respond and absorb the bump. Varying damping characteristics can also be useful for controlling suspension movement to prevent brake-dive or body roll in a cornering motor vehicle. Furthermore, when varying the damping characteristics, it is highly desirable to modify a damping device's characteristics very quickly and automatically.

One way that suspension performance can be modified in a coaxial member suspension is to incorporate a pressure activated check valve in a fluid pathway between the first and second fluid chambers. Such a valve is configured such that it remains closed unless a pressure differential between the first and second fluid chambers exceeds a preset threshold. When such a valve is in the closed position, a highly restrictive or completely obstructed fluid pathway exists between the first and second fluid chambers. This results in a high damping force, or a total hydraulic lock-out, that is desirable when a bicycle rider is pedaling. When the valve is in the open position, a larger fluid passage is uncovered to allow a high rate of fluid flow between the two fluid chambers, allowing the suspension to move more freely to absorb a bump. Setting a high pressure threshold results in improved suspension resistance to pedal-induced forces and a reduction in brake dive, however the suspension loses its ability to absorb smaller bumps resulting in a relatively rough ride. This makes it difficult for the designer to correctly tune the damping device.

As an example of the prior art, U.S. Patent 5,186,481 titled BICYCLE WITH IMPROVED FRONT FORK WHEEL SUSPENSION describes a front fork wheel suspension of a bicycle that has two telescoping suspension assemblies, one on each leg of the front fork. Each of the suspension assemblies includes a pair of telescoping tubes having a hydraulic fluid and an airspace therein, as well as a spring-loaded valve which regulates the flow of hydraulic fluid between the two tubes of the telescoping assembly. To control the point at which the assemblies change from a rigid, locked condition, in which the valve plate is closed, to a shock absorbing, telescopically displaceable condition, in which the valve plate is open, an adjustor rod is provided by which the degree of precompression of the valve spring can be changed. Furthermore, in order to improve the rigidity of the fork, the cross member interconnecting the lower tubes of the suspension assemblies has a compound cross-sectional shape which goes from circular cross section at a U-bend portion into a rectangular cross section at straight, leg portions thereof.

As another example of the prior art, U.S. Patent 6,120,049 titled BICYCLE SHOCK ABSORBER INCLUDING LOCKOUT MEANS describes an improved shock absorber for use in the front fork suspension of a mountain bicycle that includes a housing having a pair of telescopically-arranged cylinders containing a rebound damping piston, a compression damping piston, and a lockout damping piston arranged on the opposite side of the compression piston from the rebound piston, a manually-operable lockout shut-off valve is provided that is operable independently of the compression damping piston between a closed lockout condition in which the lockout piston is activated, and an open condition in which the lockout piston is de-activated, thereby to change the operating characteristics of the shock absorber. The compression piston, the lockout piston, and the lockout shut-off valve are connected to define an assembly that is removably connected as a unit with the upper end of the shock absorber housing, thereby to permit removal of the assembly for adjustment of a flow control device associated with the compression piston. An independently adjustable rebound piston arrangement is provided at the lower end of the shock absorber housing for damping the rebound strokes of the shock absorber. All of the pistons are provided with blow-off valves so that the return action of one piston does not influence another piston.

As yet another example of the prior art, U.S. Patent 6,217,049 titled BICYCLE SUSPENSION SYSTEM WITH SPRING PRELOAD ADJUSTER AND HYDRAULIC LOCKOUT DEVICE describes a bicycle suspension fork for use on a bicycle, and preferably a road bicycle. The suspension fork has a preload adjuster that is designed and formed such that it is readily usable in the front fork of a bicycle without adding undue weight to the bicycle. The preload adjuster has interengaging preload elements that, instead of having a bulky adjustment mechanism, typically provide for preload adjustment. Preferably, the preload elements have interengaging ribs and grooves, the relative position of which are adjustable to adjust preload on the suspension biasing element in the fork. Additionally, a lockout mechanism is provided for adjusting the compressibility of the suspension fork by rotating no more than about 60 degrees during use of the bicycle. The lockout mechanism preferably has first and second fluid chambers in fluid communication and a fluid circulation control unit. Fluid flows between the fluid chambers during compression and expansion of the suspension fork. The control unit controls fluid flow between the chambers and thus controls compressibility of the fork.

It would be desirable to have a valve system that is largely insensitive to the level of pressure in the system, yet sensitive to activation when high rates of pressure change are present in the system.

### SUMMARY

An aspect of the present invention is a movable valve for a damping system in a suspension that is sensitive to opening when high rates of pressure change are present in the system. The valve system is usable in place of other valve mechanisms in a number of existing damping systems.

Described herein is an apparatus that includes valve means for controlling the flow of fluid between a first fluid chamber and a second fluid chamber via a first fluid pathway in a damping device in response to the rate of pressure change in the first fluid chamber, such that when the valve is in a closed state, a sufficiently strong and sufficiently relatively rapid change of pressure cause the valve to move to an open state that enables flow through the fluid pathway, and such that a relatively slow change of pressure maintains the valve in the closed state that restricts or prevents flow through the fluid pathway.

One embodiment further includes means for biasing the valve means towards the closed state.

In one embodiment, the valve means includes a second fluid pathway to provide fluid connection between the first fluid chamber and a third fluid chamber, and such that the rate of flow in the second fluid pathway is restricted.

According to another aspect of the invention, described herein is a damping device that includes a first damper element movable in a first hollow region having an inner wall and formed by a frame having the inner wall. In one version, the first damper element is a damper piston slidably movable in the first hollow region.

The damping device further includes a first valve having a first surface and a second surface, and movable between a first (closed) position and a second (open) position, such that a first fluid chamber is formed by surfaces that include the inner wall of the first hollow region, and the first surface of the first valve, and such that forces applied to the first damper element relative to the frame causes a change of fluid pressure in the first fluid chamber. The valve is oriented between the first fluid chamber and a third fluid chamber formed in the frame. The third fluid chamber is formed by surfaces that include the second surface of the valve and a second inner wall of a second hollow region in the frame.

The damping device further includes a first fluid pathway that connects the first fluid chamber with a second fluid chamber formed in the frame. The first fluid pathway is configured such that it is at partially or completely blocked when the first valve is in the first (closed) position, and at least partially unblocked when the first valve is in the second (open) position.

The damping device further includes a second fluid pathway that connects the first fluid chamber with the third fluid chamber.

The valve is configured such that pressure in the first fluid chamber, e.g., caused by forces on the first damper element relative to the frame, act on the first surface of the first valve to impart a force oriented to push the valve away from the first position and towards the second position.

The valve further is configured such that pressure in the third fluid chamber acts on the second surface of the valve to impart a force on the valve towards the first position.

The first and second fluid pathways, and the valve are configured such that forces on first damper element relative to the frame that cause a relatively fast change in the pressure in the first fluid chamber cause the valve to open by the valve moving from the first to the second position so that fluid passes from the first to the second fluid chambers via the first fluid pathway, as well as from the first fluid chamber to the third fluid chamber via the second fluid pathway, and wherein forces on the first damper element relative to the frame that cause a relatively slow change of pressure in the first fluid chamber cause fluid to move from the first fluid chamber to the third fluid chamber via the second fluid pathway without opening the valve.

Also described herein is a method that includes controlling the flow of fluid between a first fluid chamber and a second fluid chamber via a first fluid pathway in a damping device in response to the rate of pressure change in the first fluid chamber. The controlling is such that a sufficiently strong and sufficiently relatively rapid change of pressure enables flow through the fluid pathway, and such that a relatively slow change of pressure restricts or prevents flow through the fluid pathway.

In one embodiment, the controlling of the flow of fluid via the first fluid pathway uses a movable valve that is movable between a first closed position wherein fluid flow via the first fluid pathway is prevented or restricted, and a second open position wherein fluid flow via the first fluid pathway is at least partially unrestricted.

One embodiment includes biasing the movable valve towards the first closed position.

One embodiment further includes providing a second fluid pathway for fluid connection between the first fluid chamber and a third fluid chamber, in a manner such that the rate of flow in the second fluid pathway is restricted.

Alternate embodiments include other fluid pathways and components.

Other features and aspects will be clear from the drawings and description herein.

### BRIEF DESCRIPTION OF THE DRAWINGS

FIG. 1 shows a longitudinal cross-section view of one embodiment of the present invention with a first internal floating piston (IFP) and biasing devices on a first valve and the first IFP. The first valve is shown in the closed (first) position. The longitudinal direction is vertical on the page, and the transverse direction is perpendicular to the longitudinal direction.

FIG. 2 shows a longitudinal cross section of the valve system of FIG. 1 in the open (second) position.

FIG. 3 shows a longitudinal cross-section of one embodiment of the present invention with an added valve mechanism between a second fluid chamber and a third fluid chamber. The valve is shown in the closed (first) position.

FIG. 4 shows a longitudinal cross section of the valve system of FIG. 3 in the open (second) position.

FIG. 5 shows a longitudinal cross section of one embodiment of the present invention with the addition of a pressure-activated valve between a third fluid chamber and a second fluid chamber. This pressure-activated valve is shown in the closed position.

FIG. 6 shows a longitudinal cross section of the valve system shown in FIG. 5, with the valve between the third and second fluid chambers in the open position.

FIG. 7 shows a longitudinal cross section of one embodiment of the present invention with a fluid passage between a second fluid chamber and a third fluid chamber.

FIG. 8 shows a longitudinal cross section of one embodiment of the present invention integrated into a common suspension damping device.

FIG. 9 shows a longitudinal cross section of one embodiment of the present invention integrated into a common suspension damping device, with an additional fluid passage between a third and a first fluid chamber.

FIG. 10 shows a longitudinal cross section of one embodiment of the present invention integrated into a common suspension damping device, with an additional valve mechanism and fluid passage between a third fluid chamber and a first fluid chamber.

FIG. 11 shows a longitudinal cross section of one embodiment of the present invention wherein a first surface of a first valve is indirectly connected to a second surface of the first valve.

### DETAILED DESCRIPTION

Aspects of the present invention include a valve for a damping device that provides for the characteristics of the damping device to change according to the impulsiveness of the forces that are put on it. When the damping device is used in a vehicle suspension system, e.g., a bicycle suspension system, forces that result in a sufficiently relatively fast and large change of pressure within a first fluid chamber of the damping device, such as the force created by the vehicle traveling over a bump, will cause the valve to move toward an open position and allow at least some fluid in the first fluid chamber to move to a second fluid chamber, while forces that result in a relatively slow increase in pressure within the first fluid chamber of the damping device, such as the forces created by gradual braking, a rider pedaling, or a vehicle cornering, do not open the valve, so that the valve stays in (or moves to) a closed position.

Valve embodiments of the present invention can be configured such that the first fluid pathway is completely blocked when the first valve is in the first position. This allows a damping device to hydraulically lock a vehicle's suspension when the first valve is in the first position, thereby rendering the suspension rigid and inactive.

Valve embodiments of the present invention also can be configured such that the first fluid pathway is partially blocked when the first valve is in the first position, allowing a damping system to provide a varying level of damping force dependant on the position of the first valve between the first position and the second position.

Valve embodiments of the present invention could be used in one or both the compression and rebound circuits of a damping device, in multiple fluid paths, in parallel or in series with other elements, e.g., hydraulic elements that are known to those who are skilled in the art.

While inventive aspects of the present invention relate to the valve, rather than to the design of a complete damping device, a complete damping device that includes an embodiment of the valve system is also inventive, and thus considered an embodiment of the invention.

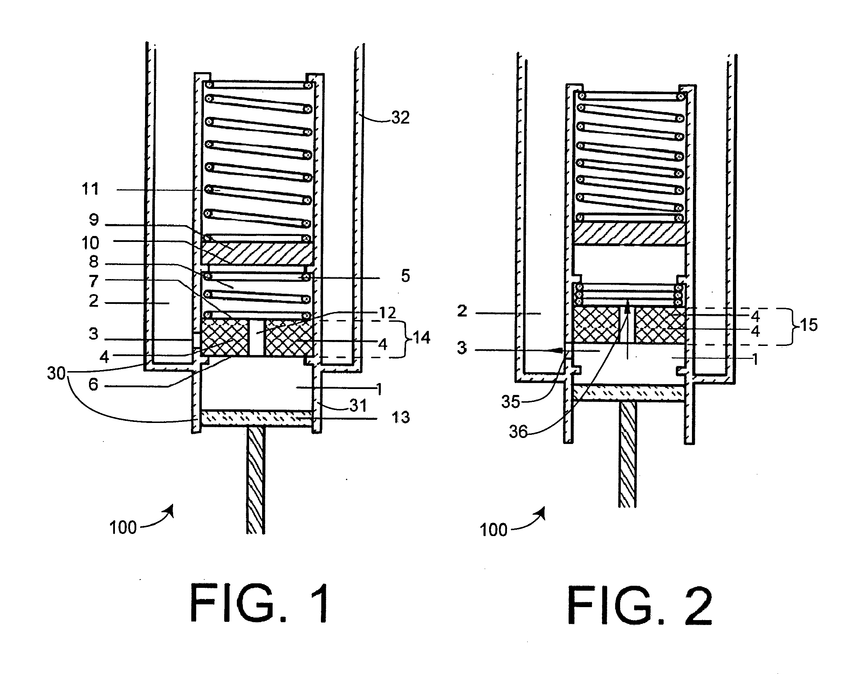

FIGS. 1 to 11 show longitudinal cross-sectional views of embodiments of a part of a damping system, where the longitudinal direction is defined as the vertical direction on each drawing page. The transverse direction(s) are perpendicular to the longitudinal direction. Note that FIGS. 1 to 11 show a damping system 100 that includes a valve embodiment (reference numeral 4) configured to slide up and down within an enclosure formed from a frame. Those in the art will understand that in an actual embodiment, the frame and the enclosure therein would need to be constructed of separate parts to make assembly possible. The drawings are provided in simplified form to explain the principle of operation, and are not to scale. While not shown in the figures, a working embodiment of the present invention would also use sealing mechanisms to prevent substantial fluid flow between fluid chambers and through closed pathways. These seals can be any seal types, e.g., hydraulic seal types that are well known to those who are skilled in the art, such as o-ring seals or close fit seals between components, and preferably have low friction and high pressure sealing characteristics. Those skilled in the art would readily be able to add implementation details to the provided drawings to form engineering drawings for an actual implementation.

Note further that while one embodiment of the invention is intended for use in a bicycle suspension, e.g., a mountain bicycle suspension, the invention is not restricted to such vehicles.

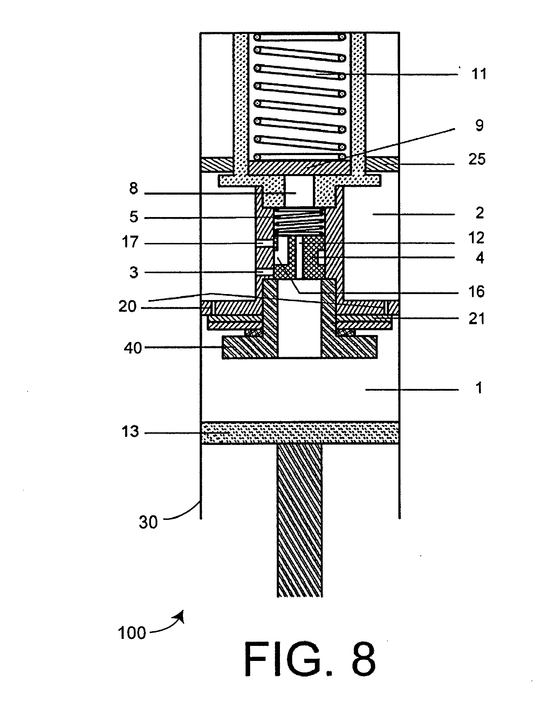

Note further that the same reference numerals are used in each of the Figures for the elements that have the same function, even though these elements may have different design from drawing to drawing. For example, first, second, and third fluid chambers are shown as having reference numeral 1, 2, and 8, respectively, in all drawings, even though, for example, these fluid chambers are configured differently in FIGS. 1 and 8. Similarly, each of the drawings uses reference number 100 for a part of a damping device. Again, the damping device parts shown in FIGS. 1 and 8 are different, even though the same reference numeral is used.

FIGS. 1 and 2 each show a longitudinal cross-section view of a part of a damping system 100 that includes a first valve 4 that operates according to an aspect of the present invention. The first valve 4 is shown in a closed (first) position 14 in FIG. 1, while FIG. 2 shows a longitudinal cross section of the part of the damping system 100 with the first valve 4 in an open (second) position 15. The damping device part 100, shown in FIGS. 1 and 2, uses a coaxial sliding-type arrangement wherein a first member 13, e.g., a damper piston and rod moves in a first hollow region formed by a first part 31 of a frame 30. The piston, the walls of the first hollow region, and the first valve 4 define a first fluid chamber 1. A second part 32 of the frame 30 has a larger cross-section in the transverse direction than the first part 31, is coaxial to the first part 31, and defines a second fluid chamber 2 between the first and second parts 31, 32 of the frame 30. The first valve 4 of the damping device part 100 provides a varying degree of obstruction to one or more fluid passages in the device based on the rate of pressure change in the first fluid chamber 1, which in turn is based on the impulsiveness of the forces on the damper piston 13 of the device relative to the frame 30 of the device. In particular, FIGS. 1 and 2 show how the valve 4 when open allows fluid to flow from the first fluid chamber to a second fluid chamber (as well as from the first fluid chamber to a third fluid chamber) in the case of a relatively fast change in pressure in the first fluid chamber, and also how the valve 4 allows fluid to flow from the first fluid chamber only to the third fluid chamber in the case of a relatively slow change in pressure in the first fluid chamber while blocking fluid flow from the first fluid chamber to the second fluid chamber.

However, in alternate embodiments, an alternate valve type to that of first valve 4 could be used to provide the varying degree of obstruction according to the suddenness of the change in pressure in the first fluid chamber, or to the magnitude of the pressure in the first fluid chamber, including a needle valve, a face valve, or shim_arrangements, or other valve types, and such alternate arrangements are considered within the scope of the present invention.

In the embodiments described herein and illustrated in FIGS. 1-7, and FIG. 11, the first and second parts 31, 32 of the frame 30 are each cylindrical, i.e., have circular cross-sections in the transverse direction, so that the first fluid chamber 1 is a cylindrical volume, while the second fluid chamber 2 has an annular cross-section in the transverse direction (ignoring any attachment parts that may be in the fluid chamber). Those in the art will recognize that in different embodiments, other transverse-direction cross-section shapes may be used for the first and second parts. Furthermore, since no pistons or valves slide within the second fluid chamber, the second part of the frame may have a transverse-direction cross-sectional shape that varies along the longitudinal direction. In the embodiments described herein, the first and second parts of the frame 30 are cylindrical.

In alternative embodiments of the present invention, the second fluid chamber 2 may be open to the atmosphere, sealed, or a sealed fluid chamber of variable volume. A sealed fluid chamber of variable volume may be constructed by including an internal floating piston (IFP). Alternatively, a fluid chamber of variable volume can be constructed by including a compressible fluid in the second chamber 2. By the term "compressible fluid" is included an emulsified fluid that can change its volume. Alternatively, the second fluid chamber is internally fitted with a compressible bladder. By the term "compressible bladder" is meant literally a compressible bladder, but the term is also used herein to include any other compressible apparatus mechanism or device known by those skilled in the art that allows for a variation in the volume of the second fluid chamber 2.

The damper device part 100 shown in FIGS. 1 and 2 includes a first fluid passage 3 that, when the first valve 4 is in the open position 15, is substantially unobstructed by the first valve 4 such that fluid can substantially flow from the first fluid chamber 1 through the first fluid passage 3 to the second fluid chamber 2. When the first valve 4 is in the first position 14, the valve is closed in that it blocks the first fluid passage 3 such that fluid cannot flow between the first fluid chamber 1 and the second fluid chamber via the first fluid passage 3. In this exemplary system, the damping device part 100 is part of a vehicle suspension device arranged to dampen or prevent movement between a first body part mechanically connected to the first damper element, e.g., damper piston 13 and a second body part mechanically connected to the frame 30. For example, in one application the first and second body parts are parts of a bicycle, e.g., a mountain bicycle. Movement of the suspension device part 100 is by the first damper element, e.g., the damper piston 13 moving in relation to the frame body 30, and such movement/application of forces causes a change of pressure of the first fluid chamber 1.

In one embodiment of the present invention, the minimum cross sectional area of the first fluid pathway 3 varies between a minimum and maximum value as the first valve 4 moves from the first position 14 to the second position 15. In one embodiment, the minimum area is zero, such that the first fluid pathway 3 is completely blocked when the first valve 4 is in the first position 14. In an alternative embodiment, the minimum area is greater than zero, such that fluid can flow through the first fluid pathway 3 between the first 1 and second chambers 2 when the first valve 4 is in the first position 14.

In an embodiment of the present invention, a first biasing method, e.g., a first biasing method using a first biasing device 5 is included to impart a force on the first valve 4 towards the first position 14. FIGS. 1 and 2 show first biasing device 5 as a spring. In alternate embodiments, the first biasing method is one of the set consisting of:

● a method using a first biasing device 5 having a spring,

● a method using a first biasing device 5 having a pressurized chamber,

● a method using a first biasing device 5 having a compressible material,

● a first biasing method that uses the nature of the valve material itself to impart the force, such as in the case of using a flexible shim as the valve, or

● a first biasing method that uses a valve 4 that has a larger surface area on the surface 7 of the first valve 4 away from the first position, called the back surface 7, than on the front surface 6 that is exposed to the fluid chamber 1, so that the force is imparted in the valve towards the first position 14 when the pressure in the third fluid chamber 8 is approximately equal to or greater than the pressure in the first fluid chamber 1. The front surface 6 is also called the first surface 6 of the first valve 4, while the back surface is also called the second surface 7 of the valve.

In other alternate embodiments, an alternate first biasing means, e.g., a first biasing device 5 that uses a method other than that mentioned above is used to impart a force on the first valve 4 towards the first position.

In all the included drawings, the first biasing method uses first biasing device 5 that has a spring.

The first valve's second surface 7 is exposed to a third fluid chamber 8 formed from the frame, the first valve's second surface 7, and a first internal floating piston (IFP) 9 that has a first surface 10 exposed in the third fluid chamber 8. In one embodiment, the first IFP 9 is movable in a longitudinal direction from a rest position, and such movement causes the volume of the third fluid chamber 8 to vary. In one embodiment, a second biasing method, e.g., using a second biasing device 11 is included to impart a force on the first IFP 9 towards its rest position. In the drawings, the second biasing method uses a second biasing device 11 using a spring. In alternate embodiments, the second biasing device 11 is a pressurized chamber, elastomer, or another compressible material. Alternately, the second biasing method uses some means to impart the required force on the first IFP.

In another alternate embodiment, a compressible fluid is used in the third fluid chamber, so that there is no need to have an IFP (the first IFP). By the term "compressible fluid" is included an emulsified fluid that can change its volume. Alternatively, the third fluid chamber is internally fitted with a compressible bladder. By the term "compressible bladder" is meant literally a compressible bladder, but the term is also used herein to include any other compressible apparatus mechanism or device known by those skilled in the art that allows for a variation in the volume of the third fluid chamber 8.

The first fluid chamber 1 and third fluid chamber 8 are filled with fluid. In one embodiment of the invention, this fluid is suspension damper oil. However in alternate embodiments, the fluid may be any fluid or a combination of fluids. The second fluid chamber 2 is fillable with a compressible or non-compressible fluid, or any combination of fluids.

While not shown in FIGS. 1 and 2, the second fluid chamber 2 may also contain an IFP to allow its volume to expand as fluid travels from the first fluid chamber 1 to the second fluid chamber 2. Alternately, the second fluid chamber may be a sealed chamber and may be fitted with a device that allows a change in volume of the second fluid chamber 2. Such compressible devices are known to those skilled in the art.

One aspect of the invention is that the damping system 100 includes a second fluid passage 12 between the first 1 and third fluid chambers 8 to enable fluid flow between the first fluid chamber 1 and third fluid chamber 8. In one embodiment, the second fluid passage 12 is in the first valve 4.

When there is a relatively fast increase in pressure in the first fluid chamber 1, there may be an instantaneous pressure differential between the first 1 and third fluid chambers 8. This results in a force on the first surface 6 of the first valve 4 that opposes the force of the first biasing method, e.g., from the first biasing device 5 when the first biasing method uses such a device. If the force is great enough, it acts to open the valve 4 by moving the first valve 4 from the first position 14 to the second position 15, hence allowing fluid to flow from the first fluid chamber 1 to the second fluid chamber 2 through the first fluid passage 3. Such fluid flow is indicated by arrow 35 in FIG. 2. At the same time, fluid may also flow through the second fluid passage 12, as indicated by arrow 36 in FIG. 2, such flow acting to equalize the pressure differential between the first fluid chamber 1 and the third fluid chamber 8.

The second fluid passage 12 is configured to restrict the rate of fluid flow, so that the third fluid chamber 8 takes some time to approach the pressure of the first fluid chamber 1. Thus, the first valve remains in the open (second) position 15 while the pressure differential between the first 1 and third 8 fluid chambers decreases until the pressure in the third fluid chamber 8 approaches that of the first fluid chamber 1, at which point the force due to the first biasing method, e.g., using the device 5 if used, causes the first valve 4 to move toward the first position 14 and thus close.

When on the other hand there is a relatively slow increase in pressure in the first fluid chamber 1, the second fluid pathway 12 is configured such that flow through the second fluid passage 12 equalizes any pressure differential between the first fluid chamber 1 and third fluid chamber 8. As a result, there is insufficient force imparted on the valve 4 to counteract the force imparted by the first biasing method, so that the valve remains in the first (closed) position.

The valve thus opens for relatively impulsive forces that cause a relatively rapid change in pressure in the first fluid chamber 1, and does not open for relatively less impulsive forces that cause a relatively slow change in pressure in the first fluid chamber 1.

In the embodiments wherein the first IFP 9 is movable, the first IFP 9 moves as necessary to accommodate changes in fluid volume and pressure in the third fluid chamber 8.

In one embodiment of the invention, the second fluid chamber is left open to the atmosphere. In another embodiment of the invention, described further below with the aid of FIG. 8, a second IFP is used to separate the fluid in the second fluid chamber from the atmosphere. In yet another alternate embodiment of the invention, the second fluid chamber is essentially sealed to the atmosphere, and a compressible bladder, a compressible fluid, or an emulsified fluid is fitted in the second fluid chamber.

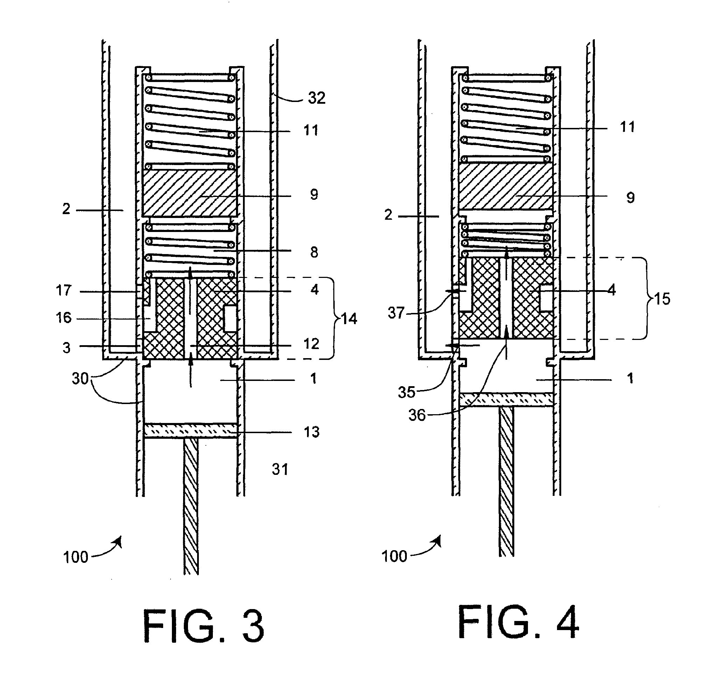

FIGS. 3 and 4 respectively show longitudinal cross-sectional views of an alternate embodiment of the damping device part 100 with an alternate embodiment of the first valve 4 shown in the first (closed) and second (open) positions. In this embodiment, the first valve 4 includes a fluid pathway 16 that is connected at one end to the third fluid chamber 8. A fourth fluid passage 17 is included to which the fluid pathway 16 is connected when the first valve 4 is in the second (open) position 15, and which is substantially blocked when the first valve 4 is in the first (closed) position 14. The combination of fluid pathways 16 and 17 is such that fluid flow between the third and second fluid chambers 8, 2, is possible when the first valve is in the second (open) position 15, and such that substantial fluid flow between the third and second fluid chambers 8, 2 is prevented when the first valve 4 is in the first closed position 14. Arrow 37 shows such flow to fluid chamber 2 when the first valve 4 is in the second (open) position 15.

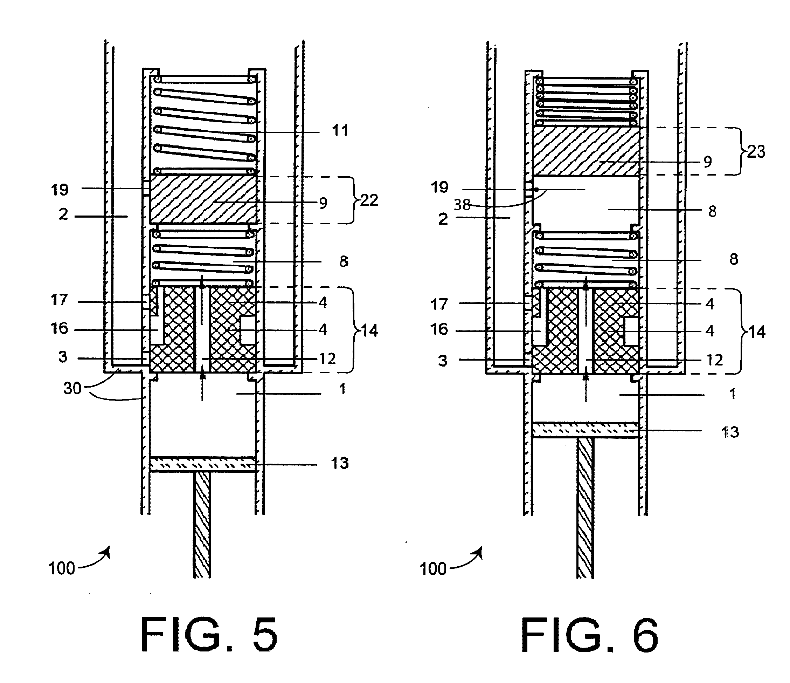

FIGS. 5 and 6 respectively show longitudinal cross-sectional views of another alternate embodiment of the damping device part 100 with the first valve 4 shown in the first (closed) positions. In this alternative embodiment, the first IFP 9 is also used as a valve between the third fluid chamber 8 and the second fluid chamber 2. When the first IFP is in the first (rest) position 22, shown in FIG. 5, it substantially blocks a fluid passage 19 between the third fluid chamber 8 and the second fluid chamber 2. When first IFP 9 is adequately displaced to reach a specified displacement into a displaced position 23, shown in FIG. 6, the first IFP 9 at least partially unblocks the fluid passage 19 such that fluid can substantially flow between the third fluid chamber 8 and the second fluid chamber 2. Such flow is shown by arrow 38 in FIG. 6.

In place of a single fluid passage, a number of fluid passages could be incorporated into the design in order to change the fluid flow rate between fluid chambers based on the displacement of the first movable IFP 9 from its rest position 22.

The inclusion of one or more fluid passages between the second and the third fluid chambers 2, 8, as shown in FIGS. 5-6, provides for altering the characteristics of the damping device part 100, and can protect the seals and other components from damage due to excessive system pressures. This/these fluid passages can be included in embodiments of the present invention either as the only fluid pathway between the third 8 and second 2 fluid chambers, or in combination with one or more of the other fluid pathways between these fluid chambers that are described herein.

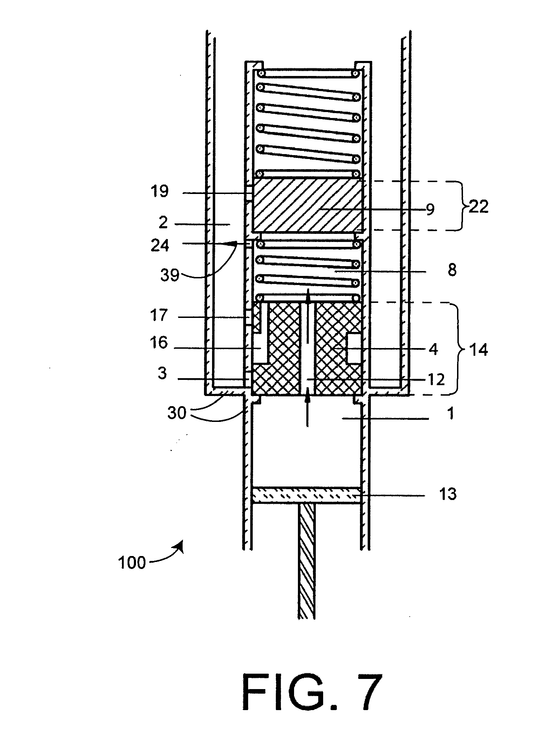

FIG. 7 shows an alternative embodiment of the present invention according to which a fluid passage 24 provides a fluid pathway between the third 8 and second 2 fluid chambers. This fluid passage 24 acts to bias the first valve 4 to more easily open, i.e., to move from the first (closed) position 14 toward the second (open) position 15 more easily. Flow from the third fluid chamber to the second fluid chamber through the fluid passage 24 is shown as arrow 39. Such a fluid passage 24 can be included in embodiments of the present invention either as the only fluid pathway between the third 8 and second 2 fluid chambers, or in combination with one or more of the other fluid pathways between these fluid chambers that are described herein.

FIG. 8 shows an embodiment of a damping device part 100 that has an alternate configuration of the second and third fluid chambers 2 and 8, and demonstrates how a different embodiment of a valve that includes aspects of the present invention may be built into an embodiment of a working damping device part 100. The damping device part 100 includes the first fluid chamber 1, the second fluid chamber 2, and the third fluid chamber 8. The interior formed by these fluid chambers 1, 2, and 8, and all fluid passages are filled with suspension damping fluid.

FIGS. 1―7 did not show how the second fluid chamber 2 is separated from the atmosphere. The damping device part 100 shown in FIG. 8 includes a second IFP 25 that separates the suspension damping oil in the fluid chambers from the atmosphere or other fluid. The second IFP 25 is movable to allow an expansion in volume of the second fluid chamber 2. In one embodiment, the second IFP 25 may be held in a rest position―not indicated in FIG. 8―using a third biasing method, e.g., a third biasing device (also not shown in FIG. 8) to impart a force on the second IFP 25 towards its rest position. In different versions, the third biasing method may use a third biasing device such as a pressurized chamber, a spring, elastomer, or other compressible fluid or solid, or may use another method to bias the second IFP 25 towards its rest position, and how to so incorporate an alternate biasing method would be clear to those skilled in the art.

In an alternate embodiment to that shown in FIG. 8, instead of the second IFP 25, the fluid chambers may be sealed and incorporate a compressible bladder, where the term compressible bladder is used herein as literally a compressible bladder, or another compressible apparatus that provides for facilitates a change in volume of the second fluid chamber 2. How to incorporate such a compressible apparatus would be clear to those skilled in the art.

The damping device part 100 of FIG. 8 also includes a rebound fluid path that in one embodiment is typical of one that is found in a conventional damping device. The rebound fluid path is through fluid pathway 20 in FIG. 8, and includes check valve such as a shim or shim stack 21 held by a retainer 40. Shim/shim stack 21 is configured to allow fluid flow from the second fluid chamber 2 to the first fluid chamber 1 through the fluid pathway 20, but no fluid flow in the opposite direction. Alternate embodiments use alternate check valve types. When there is higher pressure in the second fluid chamber 2 than the first fluid chamber 1, the shims 21 bend slightly to allow fluid to flow through the rebound fluid pathways 20 from the second fluid chamber 2 to the first fluid chamber 1.

In alternate embodiments, one or more alternate valve mechanisms may be used in place of the shim stack 21 described herein to control fluid flow from the second fluid chamber 2 to the first fluid chamber 1. Examples include a spring loaded valve, or some other type of valve. Details of, along with how to incorporate such an alternate valve mechanism would be known to those skilled in the art.

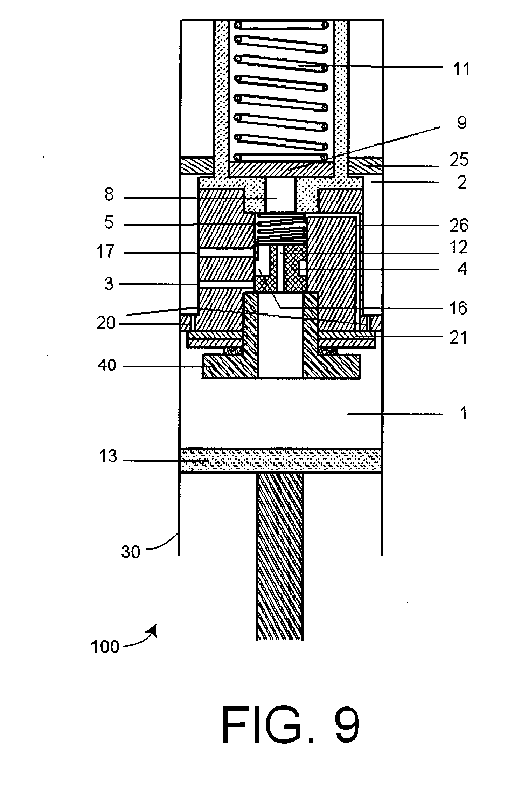

FIG. 9 shows another alternative embodiment of a damping device part 100 that includes, in addition to the fluid pathway 20 and the shim/shim stack 21, a fluid pathway 26 that, under certain conditions, connects the third fluid chamber 8 and the first fluid chamber 1. This fluid pathway is used in addition to one or any combination of the third fluid chamber 8 fluid pathways and valves described herein. The device 100 includes a check valve in the additional fluid pathway 26 between the first fluid chamber and the third fluid chamber. In one version, the check valve in the additional fluid pathway is the existing shim stack 21 used to allow fluid to flow between the second fluid chamber 2 and first fluid chamber 1 via the fluid pathway 20.

In alternative implementations to that shown in FIG. 9, a separate check valve is used in the fluid pathway 26. How to replace the shim/shim stack 21 for a separate, possibly different type of valve, e.g., one known to those in the art such as another shim stack, a spring loaded valve, or some other type, would be clear to those skilled in the art.

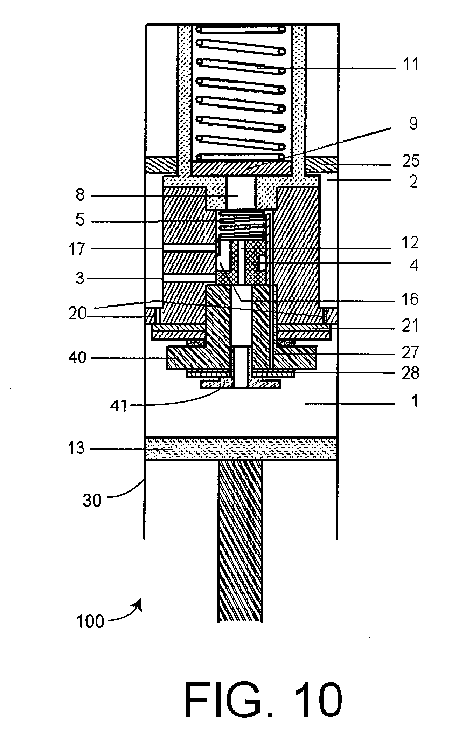

FIG. 10 shows another alternative embodiment of a damping device part 100 that includes an additional fluid pathway 27 between the third fluid chamber 8 and the first fluid chamber 1, and an additional valve, in the form of a shim stack 28 configured to control the opening of the fluid pathway 27 between the third fluid chamber 8 and the first fluid chamber 1 when the pressure in the third fluid chamber 8 exceeds the pressure in the first fluid chamber 1. The fluid pathway 27, in one embodiment, is through at least the retainer 40. The shim stack valve 28 is retained to the retainer 40 using another retainer 41.

While FIG. 10 shows a shim stack valve to control the flow via the fluid pathway 27 between the third fluid chamber 8 and the first fluid chamber 1 according to the pressure differential between the first fluid chamber 1 and the third fluid chamber 8, in alternate versions, a different type of valve, e.g., one known to those skilled in the art may be used. The additional fluid pathway 27 of FIG. 10 may be used in addition to one or any combination of the third fluid chamber 8 fluid pathways and valves described herein.

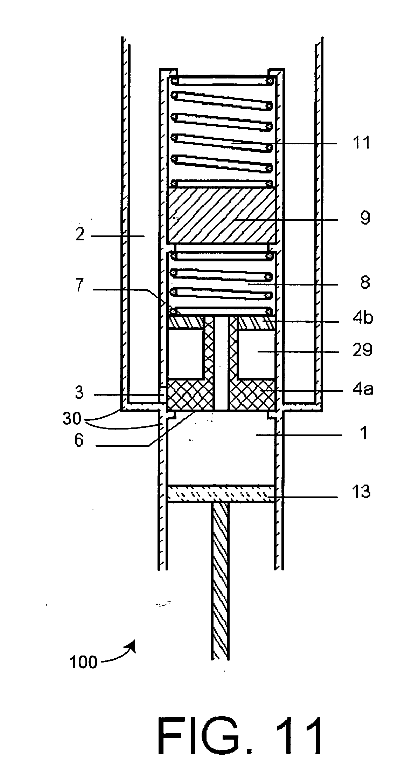

FIG. 11 shows a damping device part 100 that includes an alternate embodiment of a first valve 4 that is made up of a first part 4a and a second part 4b connected to each other by a pressurized gas chamber 29, so that the valve 4 includes the valve part 4a, the valve part 4b, and the connection between them using the pressurized gas chamber 29. In alternate embodiments, the parts 4a and 4b of the valve 4 may be connected together using an alternate means of mechanical connection, e.g., means of mechanical connection known to those in the art including but not limited to direct mechanical contact between the first part and second part, a compressible solid, e.g., a spring, a fluid, or an elastomer.

Thus, in one embodiment, the first and second surfaces of the first valve are directly connected and constructed from the same material. In an alternate embodiment, the first and second surfaces of the first valve are connected by mechanical means, such as mechanical means well known to those in the art. The mechanical means include one or more of the set consisting of a spring, a fluid chamber, a compressible bladder, an elastomer, and a compressible fluid or solid. For example, the first surface of the valve may include a shim stack, and the second surface to be a piston pushing down on the shim stack.

As in the embodiment of FIGS. 1 and 2, forces on the first damper element, e.g. the damper piston 13 relative to the frame causes a change, e.g., a rise in pressure in the first fluid chamber 1 that causes a force to be imparted on the first surface 6 in the direction away from the first (closed) position to the second (open) position.

By using fluid pathways having different relative sizes, damping device parts having different damping characteristics may be designed.

In one embodiment, the first fluid pathway's effective flow area is externally adjustable. Furthermore, in one embodiment, the second fluid pathway effective flow area is externally adjustable. Thus, in different embodiments, some or all fluid passages may be modified with valve mechanisms to allow adjustment of the fluid passage size or the rate of fluid transfer possible through any pathway. This allows the damping device to be fine-tuned for specific requirements.

Alternate embodiments further provide for adjusting the characteristics of the embodiments of the damping device part 100 by modifying some or all of the biasing methods. For example, some or all of the biasing devices may be configured to provide for external user adjustment of the characteristics of the respective one or more biasing methods or devices. In different versions, such biasing devices provide for user adjustments that include, depending on the type(s) of biasing device, but is not limited to, adjustment of spring preload, elastomer preload, chamber pressure, chamber volume, compressible bladder internal pressure, compressible bladder internal volume, shim stack stifffiess, or shim stack preload. This allows the damping device to be fine-tuned for specific requirements. As an example, external pressure adjustment of a chamber or bladder may be provided by including a valve mechanism, such as a Schrader valve, oriented such that it's within fluid connection with the chamber/bladder to be adjusted, and oriented such that the valve mechanism is located on the external surface of the damping device part 100 and can be connected externally to a gas pump. Other provisions for adjustment may be incorporated by including an adjustment rod in a hollow region of the frame, with a thread located coaxially around the adjustment rod, with the threaded portion in contact with a mating thread in the hollow region of the frame, oriented such that the adjustment rod can be rotated externally by a user. Rotating the adjustment rod causes the rod to be displaced relative to the frame. In one implementation of an adjustment device included with an embodiment, an adjustment rod may be secured at one end to a biasing device, providing a method for preload adjustment of the biasing device. In another implementation of an adjustment device, an adjustment rod is secured at one end to a piston, with one surface of the piston being in fluid connection with one chamber in the frame, such that rotation of the rod causes the piston to be displaced relative to the frame, causing a change in volume in the chamber. In another implementation of an adjustment device, an adjustment rod may obstruct a fluid pathway, such that rotation of the rod causes the level of obstruction of the fluid pathway to be modified. Alternatively, other alternate adjustment means may be used to provide external adjustment, and alternate adjustment means are known to those in the art. How to modify the drawings for a practical implementation of these adjustments would be clear to those who are skilled in the art.

The embodiments shown may be further modified to include additional fluid passages and/or valves that provide fluid paths between any combinations of the first fluid chamber 1, second fluid chamber 2 and third fluid chamber 8. A shim stack or other valve mechanism known to those skilled in the art could be used to provide a fluid pathway between any two of these fluid chambers during certain conditions, such as when there is an excessively high pressure differential between two of the said fluid chambers.

As an example, in another alternative embodiment of the present invention, the first valve 4 may adjust the minimum cross sectional area of the first fluid passage 3 as it moves between the first position 14 and the second position 15. The shape of the first fluid passage 3 may be chosen to control the relationship between effective fluid passage area and valve displacement.

While not shown in the figures, the first valve's 4 surfaces 6 and 7 and the first IFPs first surface 10 may have varied surface areas.

While the drawings included herein show the first valve 4 to be movable in the longitudinal direction, in alternate embodiments the valve can be movable in any orientation between an open and a closed position.

Blow-off valves are known in the art. It should be noted that the valve 4 as described herein differs from a blow-off valve in that a blow-off valve operates according to pressure, and is insensitive to rate of pressure change, whereas the valve 4 is sensitive to and operates according to rate of pressure change.

Note the description above shows a single first fluid chamber, those in the art will understand that alternate embodiments can have a first fluid chamber that is made up of more than one subchambers that are in fluid connection so that the pressures therein are approximately equal. The first damping element may be in a first subchamber of the first chamber, and the valve in a second subchamber connected to the first subchamber of the first chamber. Similarly, any fluid chamber may be made up of sub-chambers that are in fluid connection.

While the embodiments shown in the drawing show a first damping element that is a piston that is movable, those in the art will understand that other mechanisms are possible such that a change of force applied on the first member relative to the frame causes a change in pressure in the first fluid chamber.

Reference throughout the claims or elsewhere herein to the term "damper", "damping device" and "damping system" means any device that uses fluid to oppose the motion of a first element (13) relative to a fraine (30). As an example, the term damping device is used to refer to a device that can disable a suspension system, i.e. a hydraulic lock-out device that prevents movement of a suspension system in one or more directions, in addition to the more common meaning of suspension damping device, i.e. a device that opposes movement of a suspension system in one or more directions. Additionally, a damping device in a lock-out state is considered to be a damping device with a very high (or infinite) level of damping, as it is difficult to define how much damping force is required before a suspension becomes effectively locked-out. Hence references to changes in damping force, damping rate and damping characteristics in the claims and herein can mean a change in the damping device's behavior from that of a traditional damper to that of a locked-out device, and vice versa.

While the main aspect of the invention is the valve that controls the fluid pathway 3 between the first and second fluid chambers, those in the art will understand that the fluid pathway 3 may include one or more other fluid flow obstructions, such as valves and/or control mechanisms for various other purposes. Similarly, the second fluid pathway may include one or more other fluid flow obstructions, such as valves and/or control mechanisms.

Thus, the design of the damping device 100 may be altered from those shown in the drawings, and how to modify the designs (and drawings) for a practical implementation of these adjustments would be clear to those who are skilled in the art.

Reference throughout this specification to fluid includes all fluid types, both gaseous and liquid, or a combination of fluid types.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the claims, any of the claimed embodiments can be used in any combination.

In the claims and the description herein, any one of the terms comprising, comprised of or which comprises is a an open term that means including at least the elements/features that follow, but not excluding others. Thus, the term comprising, when used in the claims or elsewhere herein, should not be interpreted as being limitative to the means or elements or steps listed thereafter. For example, The scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

Similarly, it is to be noticed that the term coupled, when used in the claims or elsewhere herein, should not be interpreted as being limitative to direct connections only. Thus, the scope of the expression a device A coupled to a device B should not be limited to devices or systems wherein an output of device A is directly connected to an input of device B. It means that there exists a path between an output of A and an input of B which may be a path including other devices or means.

Similarly, it is to be noticed that the term fluid passage and fluid pathway, when used in the claims or elsewhere herein, should not be interpreted as being limitative to direct fluid pathways only. Thus, the scope of the expression a fluid pathway between chamber A and chamber B should not be limited to systems wherein chamber A is directly connected to chamber B. It means that there exists a fluid pathway between chamber A and chamber B which may be a path including other devices or means.

Thus, while there has been described what are believed to be the preferred embodiments of the invention, those skilled in the art will recognize that other and further modifications may be made thereto without departing from the spirit of the invention, and it is intended to claim all such changes and modifications as fall within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A damping device apparatus comprising:
a first damper element (13) movable in a first hollow region having an inner wall and formed by a frame (30) having the inner wall;
a first valve (4) having a first surface (6) and a second surface (7), and movable between a first position (14) and a second position (15), such that a first fluid chamber (1) is formed by surfaces that include the inner wall of the first hollow region, and the first surface of the first valve (6), and such that a change of force applied to the first damper element (13) relative to the frame causes a change of fluid pressure in the first fluid chamber (1), the first valve (4) being oriented between the first fluid chamber (1) and a third fluid chamber (8) formed in the frame, the third fluid chamber being formed by surfaces that include the second surface of the valve (7) and a second inner wall of a second hollow region in the frame;
a first fluid pathway (3) formed in the frame, that connects the first fluid chamber (1) with a second fluid chamber (2) formed in the frame, the first fluid pathway (3) oriented such that it is completely blocked or at least partially blocked when the first valve (4) is in the first (closed) position (14), and at least partially unblocked when the first valve is in the second (open) position (15); and
a second fluid pathway (12) that connects the first fluid chamber (1) with the third fluid chamber (8),
wherein the first valve (4) is configured such that pressure in the first fluid chamber (1) caused by forces on the damper element (13) relative to the frame (30) acts on the first surface (6) of the first valve (4) to impart a force oriented to impart a force on the first valve (4) away from the first position (14) and towards the second position (15),
wherein the first valve (4) further is configured such that pressure in the third fluid chamber (8) acts on the second surface (7) of the first valve (4) to impart a force on the first valve (4) oriented away from the second position (15) and towards the first position (14), and
wherein the first fluid pathway (3), the second fluid pathway (12), and the first valve (4) are mutually configured such that forces on the damper element (13) relative to the frame (30) that cause a sufficiently relatively fast and large change of pressure in the first fluid chamber (1) cause the first valve (4) to move from the first (14) to the second (15) position, and wherein forces on the damper element relative to the frame that cause a relatively slow change of pressure in the first fluid chamber cause the valve to move towards or remain in the first position.

2. An apparatus as recited in claim 1, wherein the first and second surfaces of the first valve are directly connected and constructed from the same material.

3. An apparatus as recited in claim 1, wherein the first and second surfaces of the first valve are connected by mechanical means, the mechanical means including one or more of the set consisting of a spring, a fluid chamber, a compressible bladder, an elastomer, and a compressible fluid or solid.

4. An apparatus as recited in claim 1,
wherein the damper element (13) includes a damper piston movable in the longitudinal direction in the first hollow region,
wherein the first hollow region is formed from a first part (31) of the frame that has the inner wall and an outer wall,
wherein the first valve is slidably movable in the longitudinal direction in the first hollow region between the first position (14) and the second position (15), and
wherein the frame (30) includes a second part (32) that has a larger cross-section transverse to the longitudinal direction than the cross section in the transverse direction of the first part, the second part having an inner wall and being oriented coaxial to the first part of the frame, such that the second fluid chamber (2) is formed between the outer wall of the first part and the inner wall of the second part.

5. An apparatus comprising:
valve means for controlling the flow of fluid between a first fluid chamber and a second fluid chamber via a first fluid pathway in a damping device in response to the rate of pressure change in the first fluid chamber, such that when the valve means is in a first position corresponding to a closed state, a sufficiently strong and sufficiently relatively rapid change of pressure cause the valve to move to a second position corresponding to an open state that enables at least some flow through the fluid pathway, and such that a relatively slow change of pressure maintains the valve in the closed state that prevents or at least partially restricts flow through the fluid pathway.

6. An apparatus as recited in claim 5, further comprising:
means for biasing the valve means towards the closed state using a first biasing method.

7. An apparatus as recited in claim 5 or 6, wherein the valve means includes a second fluid pathway to provide fluid connection between the first fluid chamber and a third fluid chamber, the second fluid pathway being configured such that the rate of flow in the second fluid pathway is restricted.

8. An apparatus as recited in any preceding claim, wherein a first biasing method is used to impart a force on the first valve toward the first position.

9. An apparatus as recited in claim 8, further including a first biasing device (5) configured to impart the force on the first valve toward the first position, such that the first biasing method uses the first biasing device.

10. An apparatus as recited in claim 9, wherein the first biasing device includes one or more of the set consisting of a spring, an elastomer, and a pressurized chamber.

11. An apparatus as recited in claim 8, wherein the first biasing method uses one of the set consisting of:
the nature of the valve material itself to impart the force; and
the relative area dimensions of the opposing surfaces of the first valve, including the first valve's having a larger surface area on the surface of the first valve away from the first position than the surface area on the front surface that is exposed to the first fluid chamber.

12. An apparatus as recited in any one of claims 1 to 4 or in any one of claims 7 to 11, further including an element that provides for the volume of the third fluid chamber (8) to change.

13. An apparatus as recited in claim 12, where the element includes a compressible bladder.

14. An apparatus as recited in claim 12, wherein the providing for the volume to change is by using a compressible fluid in the third fluid chamber (8).

15. An apparatus as recited in claim 12, wherein the element is a first floating piston (9) internal to the third fluid chamber (8) and movable therein.

16. An apparatus as recited in claim 15, wherein the first floating piston (9) is pushed toward a rest position (22) by a second biasing method.

17. An apparatus as recited in claim 16, wherein the second biasing method uses a second biasing device (11), the second biasing device being one of the set consisting of a spring, a pressurized fluid chamber, an elastomer, and another compressible device.

18. An apparatus as recited in any one of claims 1 to 4 or in any one of claims 7 to 17,
wherein one or more fluid pathways, fluid chambers, valves, or other connecting devices connect the first fluid chamber (1) to the second fluid chamber (2), the first fluid chamber (1) to the third fluid chamber (8), and the second fluid chamber (2) to the third fluid chamber (8).

19. An apparatus as recited in any preceding claim, wherein one or both of the first fluid pathway (3) and the second fluid pathway (12) contain at least one fluid flow obstructions.

20. An apparatus as recited in any one of claims 1 to 4 or in any one of claims 7 to 19, further comprising:
a third fluid pathway (16) configured to connect the second fluid chamber (2) and the third fluid chamber (8), further configured such that the third fluid pathway (16) is substantially obstructed when the first valve (4) is in the first position (14), and such that the third fluid pathway (16) is substantially unobstructed when the first valve (4) is in the second position (15).

21. An apparatus as recited in claim 16, where the first floating piston (9) substantially obstructs a fourth fluid pathway (19) between the third fluid chamber (8) and the second fluid chamber (2) when the first floating piston (9) is in the rest position (22), and at least partially unblocks the fourth fluid pathway (19) when the first floating piston (9) reaches a specified displacement from its rest position into a displaced position (23).

22. An apparatus as recited in claim 21, further comprising one or more additional fluid pathways, configured in order to change the fluid flow rate between fluid chambers based on the displacement of the first floating piston (9) from its rest position (22).

23. An apparatus as recited in any preceding claim, wherein the first fluid pathway (3) has a minimum cross sectional area that varies as the first valve (4) moves from the first position (14) to the second position (15).

24. An apparatus as recited in any one of claims 1 to 4 or in any one of claims 7 to 23, further comprising:
an additional fluid pathway (26) between the first fluid chamber (1) and the third fluid chamber (8), and
a check valve (21) in the additional fluid pathway between the first fluid chamber (1) and the third fluid chamber (8).

25. An apparatus as recited in claim 24, wherein the check valve includes at least one of the set consisting of: a shim stack and a spring-loaded valve.

26. An apparatus as recited in any preceding claim, wherein the first fluid pathway's maximum cross-sectional area is externally adjustable by external adjustment of the fluid passage size or otherwise.

27. An apparatus as recited in any one of claims 1 to 4 or in any one of claims 7 to 26,
wherein the second fluid pathway has a minimum cross-sectional area that is externally adjustable by external adjustment of the fluid passage size or otherwise.

28. An apparatus as recited in any of claims 8 to 27, wherein the first biasing method's force and displacement characteristics are externally adjustable.

29. An apparatus as recited in any of claims 16 to 28, wherein the second biasing method's force and displacement characteristics are externally adjustable.

30. An apparatus as recited in claim 12 or in any of claims 15 to 29, further including provision for external adjustment that varies the pressure and volume characteristic of the third fluid chamber.

31. A method comprising:
controlling the flow of fluid between a first fluid chamber and a second fluid chamber via a first fluid pathway in a damping device in response to the rate of pressure change in the first fluid chamber, such that a sufficiently strong and sufficiently relatively rapid change of pressure enables at least some flow through the fluid pathway, and such that a relatively slow change of pressure restricts or prevents any flow through the fluid pathway.

32. A method as recited in claim 31, wherein the controlling of the flow of fluid via the first fluid pathway uses a movable valve that is movable between a first closed position wherein fluid flow via the first fluid pathway is prevented or at least partially restricted, and a second open position wherein fluid flow via the first fluid pathway is at least partially unrestricted.

33. A method as recited in claim 32, further comprising:
biasing the movable valve towards the first closed position.

34. A method as recited in any of claims 32 to 33, further comprising:
providing a second fluid pathway for fluid connection between the first fluid chamber and a third fluid chamber, in a manner such that the rate of flow in the second fluid pathway is restricted.
